# FASCICULE DE BREVET EUROPEEN

(11) **EP 0 987 565 B1**
(45) Date de publication et mention de la délivrance du brevet: **23.03.2005**
(21) Numéro de dépôt: 99402234.1
(22) Date de dépôt: 10.09.1999
(51) Int. Cl.: G01S 17/89, G01S 7/493

(54) **Imageur actif à détectivité améliorée**
Aktiver Abbilder mit verbesserter Detektivität
Active imager with improved detectivity

(30) Priorité: 15.09.1998 FR 9811498
(43) Date de publication de la demande: 22.03.2000
(73) Titulaire: Thales, 75008 Paris (FR)
(72) Inventeur: Breugnot, Sébastien, THOMSON-CSF, 94117 Arcueil Cedex (FR); Brignon, Arnaud, THOMSON-CSF, 94117 Arcueil Cedex (FR); Huignard, Jean-Pierre, THOMSON-CSF, 94117 Arcueil Cedex (FR)
(74) Mandataire: Brochard, Pascale

(56) Documents cités:
- US-A- 4 442 455
- US-A- 4 973 154
- MARRON J C ET AL: "HOLOGRAPHIC LASER RADAR" OPTICS LETTERS, vol. 18, no. 5, 1 mars 1993 (1993-03-01), pages 385-387, XP000345633

## Description

L'invention concerne un imageur actif à détectivité améliorée. L'imagerie active est basée sur l'analyse du flux renvoyé par une scène sur laquelle on a préalablement envoyé un flux de photons au moyen d'une source laser.

L'atout principal de l'imagerie active réside dans le choix possible des nombreux paramètres du flux lumineux d'émission en fonction des informations que l'on recherche dans la scène. Par exemple, en imagerie 'Doppler', on compare la fréquence de l'onde rétrodiffusée à celle de l'onde émise afin de déterminer les vibrations ou les déplacements des objets composant la scène. En imagerie télémétrique, le temps de parcours de l'onde émise par la source laser est mesuré afin de coder l'image en fonction de la distance entre la source et les objets la composant. On peut citer aussi la polarimétrie active, qui permet de faire une image de la scène en déterminant le taux de dépolarisation introduit par les objets sur l'onde incidente polarisée. On peut également citer l'imagerie active par flash, basée sur l'émission d'un flash laser, et l'analyse du flux réfléchi par les objets composant la scène, permettant ainsi la détermination du coefficient de réflexion des objets.

US-A-4 442 455 divulgue un système optique d'observation à balayage, comportant un faisceau de pompage qui induit dans un milieu d'interaction une modulation spatiale de l'indice de réfraction.

Ces systèmes sont limités en terme de détectivité, et donc de portée par le flux provenant du fond, c'est à dire le rayonnement émis par une source secondaire (lune, soleil, etc.) et diffusé par la scène dans la direction d'observation. Le flux de fond s'ajoute au signal utile, créant un signal parasite ou diminuant le rapport signal sur bruit. En imagerie active, l'onde d'émission est généralement une onde laser monochromatique ou de faible largeur spectrale. Aussi, pour minimiser le flux de fond, place-t-on classiquement un filtre laser devant le détecteur. Ce filtre passe-bande a toutefois une certaine largeur (environ 20 nm, par exemple) et le flux de fond transmis par le filtre reste une limite à la détectivité du système. On peut chercher à diminuer cette largeur de bande, mais cela se fait au détriment de l'acceptance angulaire du filtre qui devient trop faible.

Pour résoudre ce problème et s'affranchir du flux de fond, l'imageur selon l'invention met à profit le fait que le signal utile, provenant du flux laser d'émission, est cohérent, alors que le flux de fond est lui incohérent.

L'imageur selon l'invention comporte un matériau non linéaire dans lequel peuvent interagir deux ondes planes, contra-propagatives, obtenues par exemple en prélevant une partie du flux laser d'émission, et le signal utile, cohérent avec ces ondes. L'interaction résulte en la formation d'un signal conjugué en phase du signal utile, se propageant en sens inverse et pouvant ainsi être séparé du flux de fond.

Plus précisément, l'invention concerne un imageur actif comportant un laser d'illumination d'une scène, une optique permettant de collecter le flux laser renvoyé par la scène et constituant le signal utile pour la formation d'une image, le signal utile étant mélangé à un flux lumineux incohérent provenant du fond de la scène. L'imageur comporte en outre un module de détection du signal, couplé à un module de traitement du signal permettant de déterminer les caractéristiques de l'image; il est caractérisé en ce qu'il comporte en outre
- un matériau non linéaire présentant sous l'effet d'une interaction lumineuse à la longueur d'onde du laser d'illumination des propriétés de variation de son indice complexe, le matériau non linéaire recevant le flux collecté par l'optique,
- des moyens de prélèvement d'une partie du flux émis par le laser d'illumination pour former une première onde plane, cohérente avec le signal utile, qui interfère dans le matériau non linéaire avec le signal utile, inscrivant ainsi dans le matériau non linéaire un hologramme dynamique,
- des moyens de génération d'une seconde onde plane, de longueur d'onde identique à celle du laser d'émission, contra-propagative de la première onde plane dans le matériau non linéaire, permettant ainsi la relecture de l'hologramme par émission d'un premier signal de relecture conjugué en phase du signal utile, le premier signal de relecture, d'intensité sensiblement proportionnelle à celle du signal utile, se propageant dans une direction colinéaire à celle du signal utile mais en sens inverse, contenant toutes les informations de phase contenues dans le signal utile, tout en étant séparé du flux de fond,
- des moyens pour envoyer ledit signal de relecture vers le module de détection.

L'imageur actif selon l'invention présente donc un filtrage très sélectif du flux de fond. D'autre part, les matériaux non linéaires peuvent être choisis de sorte à présenter une très bonne acceptance angulaire ainsi qu'une large bande spectrale de fonctionnement, rendant ainsi le filtrage réalisé adaptatif en longueur d'onde. L'imageur peut donc fonctionner avec des lasers d'émission accordables, de type oscillateur paramétrique optique (OPO).

D'autres avantages et caractéristiques de l'invention apparaîtront plus clairement à la lecture de la description qui suit, illustrée par les figures annexées qui représentent:
- la figure 1, un schéma d'un mode de réalisation d'un imageur actif selon l'invention;
- la figure 2, un schéma plus détaillé d'un mode de réalisation d'une partie de l'imageur de la figure 1;
- les figures 3a à 3c, des schémas illustrant le principe de l'holographie classique;
- la figure 4, un schéma illustrant l'holographie dynamique.

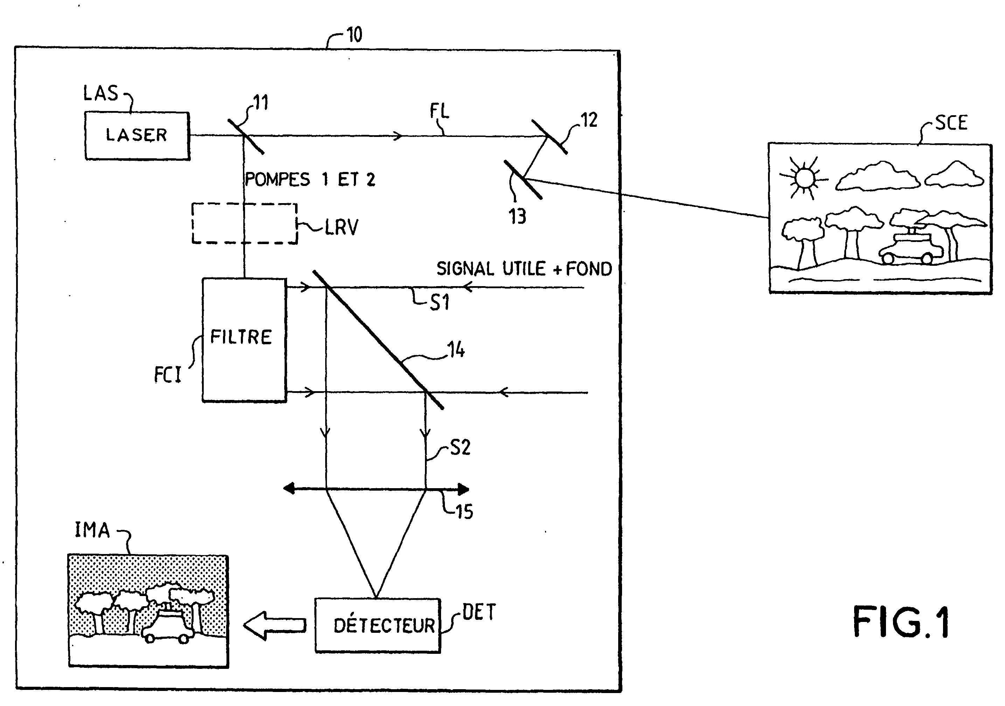

La figure 1 représente schématiquement un exemple d'imageur actif selon l'invention. L'imageur (10) comporte un laser LAS d'illumination d'une scène SCE, une optique, non représentée sur la figure 1, permettant de collecter le flux laser renvoyé par la scène qui constitue le signal utile pour la formation d'une image IMA, un module DET de détection du signal, couplé à un module de traitement du signal (non représenté) permettant de déterminer les caractéristiques de l'image. Le faisceau d'émission laser FL balaie par exemple la scène au moyen d'un jeu de miroirs (12,13). Dans certains types d'imageurs, il peut s'agir aussi d'un 'flash' laser, c'est à dire un faisceau laser de forte divergence permettant de couvrir l'ensemble de la scène. Les différents objets de la scène (des arbres, une voiture, le sol) sont également éclairés par la lumière du soleil, directement ou indirectement à cause de la diffusion sur les nuages, le ciel, etc. Ce rayonnement, appelé flux de fond lorsqu'il est diffusé par la scène dans la direction d'observation de l'imageur, forme un flux lumineux incohérent qui perturbe la mesure du signal utile. Dans l'imageur actif selon l'invention, le flux constitué du signal utile auquel s'ajoute le flux de fond, noté S1 sur la figure 1, est envoyé vers un filtre cohérent/incohérent noté FCI dont le détail du fonctionnement est donné par la suite. Le filtre FCI comprend un matériau non linéaire pouvant présenter, sous l'effet d'une interaction lumineuse à la longueur d'onde du laser d'illumination, des propriétés de variation de son indice complexe. Le principe du filtre est basé sur une interaction non linéaire dans le matériau non linéaire entre le signal utile et deux ondes planes contra-propagatives appelées pompe 1 et pompe 2, le signal utile devant interférer avec au moins une de ces ondes. Dans l'exemple de la figure 1, les pompes 1 et 2 sont générées en prélevant une partie du faisceau laser d'émission FL au moyen d'une lame 11. De cette interaction, il résulte l'émission d'un signal S2 conjugué en phase du signal utile dont l'intensité est sensiblement proportionnelle à celle du signal utile. On peut ainsi définir un coefficient R de reflectivité du filtre. Notons que ce coefficient peut être supérieur à 100% du fait que de l'énergie est apportée au filtre par les pompes 1 et 2. Le signal émis S2 contient toutes les informations de phase contenues dans le signal utile, se propage dans une direction colinéaire à celle du signal utile mais en sens inverse. Il est alors facile, par exemple au moyen d'une lame séparatrice 14, de récupérer le signal S2 débarrassé du flux de fond et de le focaliser par exemple au moyen d'un objectif 15 sur le détecteur DET. L'image IMA formée présente alors un fond noir, ce qui permet d'améliorer nettement la détectivité de l'imageur et donc sa portée.

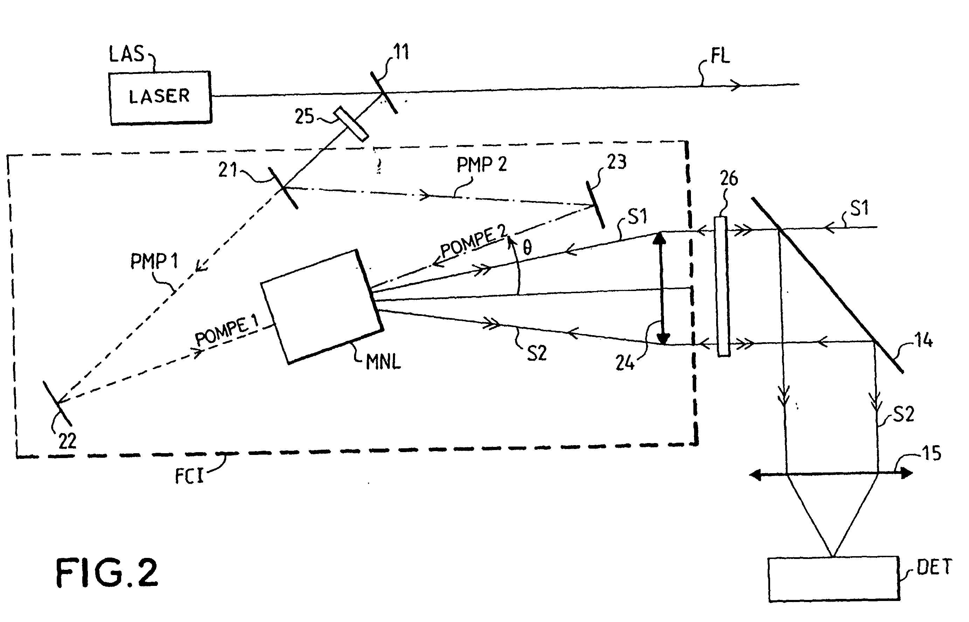

La figure 2 illustre plus en détail la partie de l'imageur de la figure 1 contenant le filtre FCI. On retrouve le laser d'illumination LAS émettant un faisceau laser FL, le laser étant par exemple continu ou quasi-continu (c'est à dire délivrant des impulsions de durées au moins supérieures au temps d'aller-retour de la lumière sur la scène), éventuellement modulé en phase ou en amplitude pour faciliter la détection de l'onde renvoyée par la scène. La lame 11 permet de prélever une partie du faisceau laser d'émission vers le filtre FCI. Le flux S1, collecté par une optique (non représentée), contenant le signal utile et le flux de fond, est envoyé vers le filtre FCI. Celui-ci comprend un matériau non linéaire MNL. Il peut comprendre en outre une optique 24 de focalisation du flux S1 dans le matériau, telle que l'intégralité du flux S1 puisse interagir dans le matériau non linéaire MNL avec les pompes. L'imageur selon l'invention comprend des moyens de prélèvement d'une partie du flux émis par le laser LAS pour former une première onde plane, appelée pompe 1 dans l'exemple de la figure 2, et notée PMP1. Ces moyens sont constitués ici de la lame 11 et d'un miroir de renvoi 22. L'onde PMP1, cohérente avec le signal utile contenu dans le flux S1, interfère avec ce signal, inscrivant dans le matériau non linéaire un hologramme dynamique (dont le principe physique est donné plus loin). L'imageur comprend aussi des moyens de génération d'une seconde onde plane, contra-propagative de la première dans le matériau non linéaire, c'est à dire se propageant dans la même direction mais en sens inverse. Cette deuxième onde, appelée pompe 2 et notée PMP2, est obtenue simplement dans l'exemple de la figure 2 en prélevant grâce à une lame 21, une partie de la pompe 1 PMP1, puis est dirigée vers le matériau non linéaire, au moyen d'un miroir de renvoi 23. On note θ l'angle fait entre l'axe commun des pompes PMP1 et PMP2 et l'axe optique du flux S1. La reflectivité R du filtre est maximale pour une valeur optimale θₘ de cet angle, cette valeur dépendant du matériau non linéaire. L'onde PMP2 permet la relecture de l'hologramme par émission du signal S2 conjugué en phase du signal utile. Il n'est pas nécessaire que l'onde de relecture PMP2 soit cohérente avec le signal utile; il suffit qu'elle ait la même longueur d'onde que celle du laser d'illumination. En pratique, et c'est le cas de l'exemple décrit sur la figure 2, la pompe 2 PMP2 est généralement prélevée sur la pompe 1 PMP1, et l'onde de relecture est également cohérente avec le signal utile. Cette configuration est d'ailleurs plus intéressante. Elle permet en effet l'inscription dans le matériau non linéaire d'un second hologramme dynamique, obtenu en faisant interférer le signal utile et la pompe 2 PMP2. Ce second hologramme est relu par la première onde plane, la pompe 1 PMP1, générant l'émission d'un signal conjugué en phase se propageant dans la même direction que le signal S2 émis par relecture du premier hologramme et de caractéristiques identiques. Pratiquement, cela revient à renforcer l'intensité du signal émis S2, et donc à augmenter le coefficient de reflectivité du filtre. L'intérêt d'une telle interaction réside dans le fait que seul le signal utile, qui représente la partie cohérente du flux collecté, interfère avec les faisceaux pompes. Par conséquent, il est possible de générer un filtre extrêmement efficace, même en présence d'un flux de fond important. Par ailleurs, en inclinant convenablement le matériau non linéaire, on évite la superposition du faisceau conjugué avec le flux de fond résiduel résultant de la réflexion sur les interfaces du matériau non linéaire.

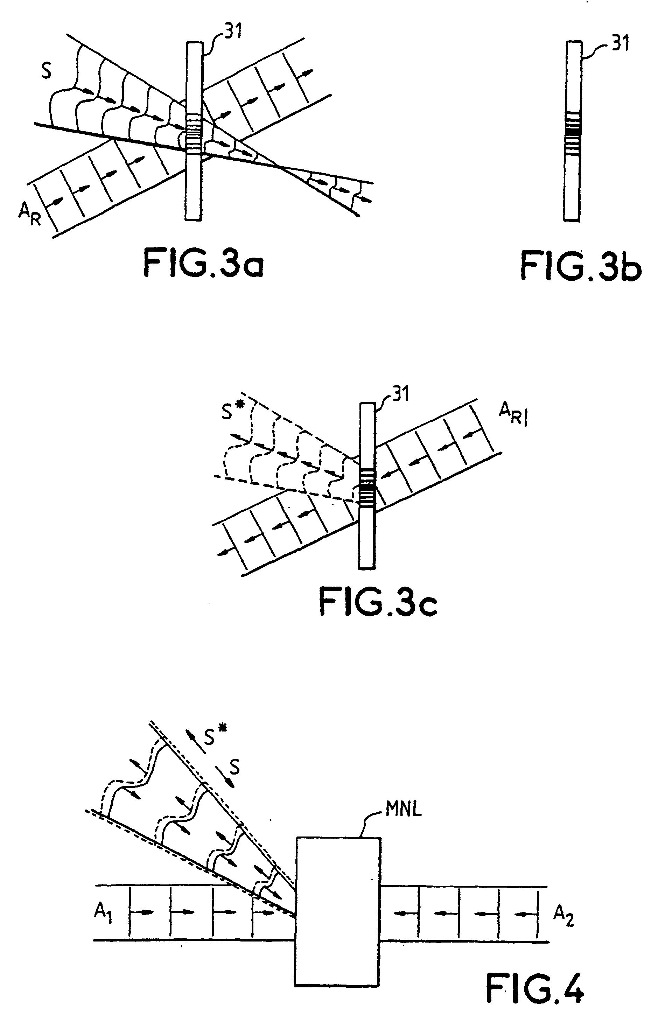

On donne maintenant quelques explications concernant les mécanismes physiques mis en jeu dans l'interaction non linéaire décrite ci-dessus et qui résulte dans l'émission du signal S2 conjugué en phase du signal utile. Cette interaction utilise le mélange à quatre ondes dégénéré (ou DFWM, abréviation de l'expression anglo-saxonne 'Degenerate Four Wave Mixing'). Ce mécanisme non linéaire, décrit par exemple dans l'article de A. Yariv, 'Phase-conjugate Optics and real-time holography', IEEE J.Quantum Electron. QE-14, 650-660 (1978), peut se comprendre facilement par analogie avec l'holographie dont le principe est rappelé sur les figures 3a à 3c. Dans un premier temps, comme cela est illustré sur la figure 3a, un faisceau signal S contenant des informations de phase interagit, au niveau d'une plaque photosensible 31, avec une onde plane de référence A_{R}. Les deux faisceaux étant cohérents, il va résulter de leur interférence, une répartition de la lumière qui dépend de la différence de leur phase en tout point de l'espace. Via un effet photochimique et après développement de la plaque, cette distribution d'intensité va se trouver transposée sous forme de variation de l'indice de réfraction (créant ainsi un hologramme de phase) ou de variation de l'absorption (hologramme d'amplitude). C'est le processus d'inscription de l'hologramme décrit sur la figure 3b. Dans un deuxième temps, comme cela est expliqué par la figure 3c, l'hologramme peut être relu avec une seconde onde plane de référence A_{R}. contra-propagative par rapport à A_{R}, de même longueur d'onde. Dans ce dernier cas, une onde conjuguée en phase de S, S*, est obtenue. Dans le mélange dégénéré à quatre ondes, toutes ces étapes se réalisent simultanément de façon dynamique et adaptative comme le montre la figure 4. Le milieu non linéaire dont l'indice complexe varie avec l'intensité lumineuse tient lieu de support holographique. Les faisceaux pompes A₁ et A₂ contra-propagatifs dans le matériau non linéaire jouent le rôle de faisceaux de références A_{R} et A_{R}. de l'holographie classique.

La diversité des matériaux non linéaires permet de réaliser des filtres cohérent/incohérent adaptés à tous les types d'imageur actif. On peut définir en effet pour chaque matériau non linéaire les configurations optimales de mise en oeuvre (en particulier en terme de polarisation des ondes qui interagissent), et la réflectivité du filtre que l'on pourra obtenir dans une configuration donnée. On peut définir aussi l'acceptance angulaire, c'est à dire l'intervalle angulaire Δθ centré sur l'angle optimal θₘ et dans lequel la réflectivité est supérieure à une valeur égale à la moitié de la valeur de la reflectivité mesurée pour l'angle optimal θₘ. On peut définir également pour chaque matériau non linéaire la longueur d'onde des faisceaux pompe et l'acceptance spectrale, c'est à dire l'intervalle de longueur d'onde dans lequel le filtre fonctionne encore. Ainsi, suivant les caractéristiques de l'imageur actif, on pourra choisir le matériau non linéaire le plus adapté et sa mise en place.

Dans le cas d'un laser d'illumination continu ou quasi-continu par exemple, les cristaux photo-réfractifs peuvent présenter des réflectivités R supérieures à 100%, des acceptances angulaires de quelques degrés et des acceptances spectrales de quelques dizaines de nanomètres. Ainsi, pour un laser d'illumination émettant dans le visible (par exemple un laser Argon ou un laser Nd:YAG doublé) l'oxyde de Bismuth-Silicium (ou 'BSO') est bien adapté. Dans le proche-infrarouge, on pourra choisir un cristal de type Arséniure de Gallium (GaAs) ou Telluride de Cadmium dopé au Vanadium (CdTe:V). L'utilisation de ces cristaux nécessite que les ondes planes contra-propagatives formant les pompes PMP1 et PMP2 soient polarisées linéairement, dans la même direction, cette direction étant parallèle à l'un des axes cristallographiques du cristal. Il importe peu par contre pour le filtrage que le signal utile soit dépolarisé (ce qui est fréquent après réflexion ou diffusion du faisceau d'illumination sur la scène). Dans ce cas, seule la composante du signal utile dont la direction de polarisation est selon cet axe va interagir pour générer le signal conjugué en phase.

Un autre type de matériaux non linéaires très intéressants pour le filtrage cohérent/incohérent dans les imageurs actifs fonctionnant avec des lasers continus ou quasi-continus sont les matériaux constituant les milieux laser des lasers d'illumination utilisés. Ces matériaux doivent être pompés (par des techniques classiques de pompage optique par lampes flash ou diodes laser); ce pompage optique permet de placer préalablement le milieu laser en inversion de population (population de l'état excité supérieure à la population de l'état fondamental). Lorsque le signal utile contenu dans le flux S1 interfère avec l'onde d'inscription de l'hologramme PMP1, il s'ensuit une répartition non uniforme de l'intensité sous la forme d'une figure d'interférence, qui crée une modulation spatiale du gain. On peut ainsi inscrire des hologrammes dynamiques par saturation du gain laser: dans les zones sombres des franges d'interférence, l'inversion de population va en effet être maintenue alors qu'elle va diminuer au niveau des franges brillantes. Par exemple, on peut utiliser comme matériau non linéaire le Nd:YAG pompé par diodes lasers lorsque le laser d'illumination est un Nd:YAG. Dans ce cas, la réflectivité est de l'ordre de 30% et l'acceptance angulaire supérieure à 20°. Comme ces milieux sont isotropes, il n'est pas nécessaire que les ondes planes d'inscription et de relecture de l'hologramme soient polarisées dans une direction particulière.

Les milieux lasers pompés peuvent également être utilisés dans les imageurs actifs fonctionnant avec des lasers d'illumination impulsionnels. Les performances du filtre cohérent/incohérent réalisé sont également très bonnes. Dans ce cas cependant, il est nécessaire pour qu'il y ait interférence entre l'onde d'inscription de l'hologramme et le signal utile, qu'il y ait recouvrement temporel entre les deux. Par exemple, les moyens de prélèvement du flux émis par le laser pour la génération des ondes planes d'inscription et de relecture de l'hologramme peuvent comporter une ligne à retard variable. Le retard est par exemple ajusté au bout de quelques impulsions, ce qui permet de bien contrôler le retard de l'impulsion émise par le laser d'illumination de la scène.

D'autre matériaux non linéaires peuvent être utilisés dans le cas de lasers d'illumination impulsionnels. Citons par exemple des matériaux semiconducteurs (Silicium Si, Tellure de Cadmium CdTe, Arsenure de Gallium GaAs, etc.). On peut citer aussi la famille des matériaux absorbants saturables, c'est à dire dont l'absorption sature avec l'énergie incidente. Par exemple, le bis(4 diméthyl amino benzyl)nickel plus connu sous le nom de 'BDN' présente une reflectivité assez faible mais une très bonne acceptance angulaire (supérieure à 90°).

Dans certaines configurations de mise en oeuvre du filtre cohérent/incohérent, il peut y avoir des effets de diffusion des pompes PMP1 et PMP2 dans le matériau qui peuvent introduire des signaux parasites sur l'image. Une variante de réalisation du filtre de l'imageur selon l'invention permet de s'en affranchir. Le matériau non linéaire utilisé présente une absorption anisotrope, par exemple un matériau de type YAG dopé chromium (Cr⁴⁺:YAG) ou GSGG dopé chromium (Cr⁴⁺:GSGG) dont l'absorption est anisotrope. Dans ces matériaux, la variation de l'indice complexe se fait selon des axes privilégiés. Dans cette variante, le faisceau émis par le laser d'illumination étant polarisé linéairement, l'imageur selon l'invention comporte des moyens de contrôle de la polarisation tels que dans le matériau non linéaire, les ondes planes d'inscription et de relecture de l'hologramme présentent la même polarisation, tandis que le signal utile présente une polarisation orthogonale à celle des ondes planes, les axes privilégiés du matériau tant à 45° des directions de polarisation du signal utile et des ondes planes. Par exemple, les moyens de contrôle comportent, comme cela est illustré sur la figure 2, une lame demi-onde 25 positionnée après la lame 11, et permettant d'orienter la direction de la polarisation des ondes planes PMP1 et PMP2. Ils comportent en outre un polariseur 26 placé par exemple devant l'optique 24 de focalisation du flux S1 dans le matériau et permettant de polariser le signal utile suivant la bonne direction. Le signal conjugué en phase présente alors une polarisation identique à celle du signal utile. L'imageur comporte en outre devant le module de détection un polariseur dont l'axe est sensiblement parallèle à la direction de polarisation du signal utile, par exemple le polariseur 26 utilisé pour polariser le signal utile. Ainsi se trouve minimisé le flux parasite pouvant être issu de la diffusion des ondes planes PMP1 et PMP2 dans le matériau non linéaire.

## Revendications

1. Imageur actif (10) comportant un laser d'illumination (LAS) d'une scène (SCE), une optique permettant de collecter le flux laser renvoyé par la scène et constituant le signal utile pour la formation d'une image, le signal utile étant mélangé à un flux lumineux incohérent provenant du fond de la scène, l'imageur comportant en outre un module (DET) de détection du signal, couplé à un module de traitement du signal permettant de déterminer les caractéristiques de l'image, l'imageur étant **caractérisé en ce qu'**il comporte en outre un matériau non linéaire (MNL) présentant sous l'effet d'une interaction lumineuse à la longueur d'onde du laser d'illumination des propriétés de variation de son indice complexe, le matériau non linéaire recevant le flux collecté par l'optique, l'imageur étant **caractérisé en ce qu'**il comporte en outre
- des moyens de prélèvement d'une partie du flux (FL) émis par le laser d'illumination pour former une première onde plane (PMP1), cohérente avec le signal utile, qui interfère dans le matériau non linéaire avec le signal utile, inscrivant ainsi dans le matériau non linéaire un hologramme dynamique,
- des moyens de génération d'une seconde onde plane (PMP2), de longueur d'onde identique à celle du laser d'émission, contra-propagative de la première onde plane dans le matériau non linéaire, permettant ainsi la relecture de l'hologramme par émission d'un premier signal de relecture (S2) conjugué en phase du signal utile, le premier signal de relecture, d'intensité sensiblement proportionnelle à celle du signal utile, se propageant dans une direction colinéaire à celle du signal utile mais en sens inverse, contenant toutes les informations de phase contenues dans le signal utile, tout en étant séparé du flux de fond,
- des moyens (14,15) pour envoyer ledit signal de relecture vers le module de détection (DET).

2. Imageur selon la revendication 1, **caractérisé en ce que** la seconde onde plane est générée en prélevant une partie du flux émis par le laser d'illumination.

3. Imageur selon la revendication 2, **caractérisé en ce que** la seconde onde plane (PMP2) interfère dans le matériau non linéaire avec le signal utile afin d'inscrire un second hologramme dynamique, celui-ci étant relu par la première onde plane (PMP1) pour former un second signal de relecture, le second signal de relecture se propageant dans la même direction que le premier signal de relecture, renforçant ainsi l'intensité du signal de relecture émis.

4. Imageur selon l'une des revendications précédentes, **caractérisé en ce que** le laser d'illumination émet en continu ou quasi-continu.

5. Imageur selon l'une des revendications 2 à 3, **caractérisé en ce que** le laser d'illumination émettant des impulsions, les moyens de prélèvement du flux émis par le laser pour la génération des ondes planes d'inscription et de relecture de l'hologramme comportent une ligne à retard variable (LRV) permettant le recouvrement temporel dans l'élément non linéaire du signal utile et des ondes planes (PMP1, PMP2).

6. Imageur selon l'une des revendications 3 à 5, **caractérisé en ce que** le faisceau émis par le laser d'illumination étant polarisé linéairement et la variation de l'indice complexe du matériau non linéaire se faisant selon un axe privilégié, l'imageur comporte en outre des moyens de contrôle de la polarisation (25,26) tels que dans le matériau non linéaire, les ondes planes d'inscription et de relecture de l'hologramme présentent la même polarisation, tandis que le signal utile présente une polarisation orthogonale à celle des ondes planes, l'axe privilégié étant à 45° des directions de polarisation du signal utile et des ondes planes, le signal conjugué en phase présentant alors une polarisation identique à celle du signal utile, et comporte en outre devant le module de détection un polariseur (26) dont l'axe est sensiblement parallèle à celui du signal utile de telle sorte que soit minimisé le flux parasite pouvant être issu de la diffusion des ondes planes dans le matériau non linéaire dans la même direction que le signal conjugué en phase.

7. Imageur selon l'une des revendications 3 à 5, **caractérisé en ce que** le matériau non linéaire est formé d'un milieu amplificateur laser pompé par diodes lasers, rendant possible une amplification du signal conjugué par rapport au signal utile.

## Claims

1. Active imager (10) comprising an illumination laser (LAS) for illuminating a scene (SCE), an optic for collecting the laser flux sent back by the scene and constituting the useful signal for forming an image, the useful signal being mixed with an incoherent light flux coming from the background of the scene, the imager furthermore including a detection module (DET) for detecting the signal, the said detection module being coupled to a signal processing module for determining the characteristics of the image, a non-linear material (NLM) exhibiting, under the effect of a light interaction at the wavelength of the illumination laser, properties of variation in its complex index, the non-linear material receiving the flux collected by the optic, the imager being **characterized in that** it furthermore includes:
- means for removing a portion of the flux (FL) emitted by the illumination laser in order to form a first plane wave (PMP1) coherent with the useful signal, which interferes in the non-linear material with the useful signal, thus writing a dynamic hologram into the non-linear material;
- means for generating a second plane wave (PMP2), of wavelength identical to that of the emission laser, propagating counter to the first plane wave in the non-linear material, thus allowing the hologram to be reread by emission of a first reread signal (S2) phase-conjugate with the useful signal, the first reread signal, of intensity substantially proportional to that of the useful signal, propagating in a direction collinear with that of the useful signal but in the opposite direction, containing all the phase information contained in the useful signal, all being separate from the background flux; and
- means (14, 15) for sending the said reread signal to the detection module (DET).

2. Imager according to Claim 1, **characterized in that** the second plane wave is generated by removing a portion of the flux emitted by the illumination laser.

3. Imager according to Claim 2, **characterized in that** the second plane wave (PMP2) interferes in the non-linear material with the useful signal so as to write a second dynamic hologram, this one being reread by the first plane wave (PMP1) in order to form a second reread signal, the second reread signal propagating in the same direction as the first reread signal, thus enhancing the intensity of the emitted reread signal.

4. Imager according to one of the preceding claims, **characterized in that** the illumination laser emits continuously or almost continuously.

5. Imager according to either of Claims 2 and 3, **characterized in that**, when the illumination laser emits pulses, the means for removing the flux emitted by the laser for generating the plane waves for writing and rereading the hologram comprise a variable delay line (VDL) allowing temporal overlap in the non-linear element of the useful signal and of the plane waves (PMP1, PMP2).

6. Imager according to one of Claims 3 to 5, **characterized in that**, when the beam emitted by the illumination laser is linearly polarized and the variation in the complex index of the non-linear material takes place along a preferential axis, the imager furthermore includes polarization control means (25, 26) such that the hologram write and reread plane waves have the same polarization in the non-linear material, whereas the useful signal has a polarization orthogonal to that of the plane waves, the preferential axis being at 45° to the polarization directions of the useful signal and of the plane waves, the phase-conjugate signal then having a polarization identical to that of the useful signal, and it furthermore includes, in front of the detection module, a polarizer (26) whose axis is substantially parallel to that of the useful signal in such a way that the parasitic flux that may arise from the scattering of the plane waves in the non-linear material in the same direction as the phase-conjugate signal is minimized.

7. Imager according to one of Claims 3 to 5, **characterized in that** the non-linear material is formed from a laser amplifying medium pumped by laser diodes, thus making it possible to amplify the conjugate signal relative to the useful signal.

## Patentansprüche

1. Aktiver Bildgenerator (10), der einen Laser (LAS) zur Beleuchtung einer Szene (SCE) aufweist, wobei eine Optik es ermöglicht, den von der Szene zurückgeschickten und das Nutzsignal für die Formung eines Bilds bildenden Laserfluss aufzufangen, wobei das Nutzsignal mit einem inkohärenten Lichtfluss gemischt wird, der vom Szenenhintergrund kommt, wobei der Bildgenerator weiter einen Modul (DET) zur Erfassung des Signals aufweist, der mit einem Signalverarbeitungsmodul gekoppelt ist, der die Bestimmung der Eigenschaften des Bilds ermöglicht, wobei ein nicht lineares Material (MNL) unter dem Einfluss einer Lichtwechselwirkung auf der Wellenlänge des Beleuchtungslasers Eigenschaften der Variation seines komplexen Indexes aufweist, wobei das nicht lineare Material den von der Optik aufgefangenen Fluss empfängt, wobei der Bildgenerator **dadurch gekennzeichnet ist, dass** er weiter aufweist
- Mittel zur Entnahme eines Teils des vom Beleuchtungslaser gesendeten Flusses (FL), um eine mit dem Nutzsignal kohärente, erste ebene Welle (PMP1) zu bilden, die im nicht linearen Material mit dem Nutzsignal interferiert, wodurch ein dynamisches Hologramm in das nicht lineare Material eingeschrieben wird,
- Mittel zur Erzeugung einer zweiten ebenen Welle (PMP2) mit der gleichen Wellenlänge wie der Sendelaser, die sich in Gegenrichtung zur ersten ebenen Welle im nicht linearen Material ausbreitet, wodurch das erneute Lesen des Hologramms durch Senden eines ersten Signals des erneuten Lesens (S2) ermöglicht wird, das mit dem Nutzsignal phasenkonjugiert ist, wobei das erste Signal des erneuten Lesens, dessen Stärke im Wesentlichen proportional zu derjenigen des Nutzsignals ist und das sich in einer zur Richtung des Nutzsignals kolinearen, aber in Gegenrichtung verlaufenden Richtung ausbreitet, alle im Nutzsignal enthaltenen Phaseninformationen enthält und gleichzeitig vom Hintergrundfluss getrennt ist,
- Mittel (14, 15), um das Signal des erneuten Lesens zum Erfassungsmodul (DET) zu senden.

2. Bildgenerator nach Anspruch 1, **dadurch gekennzeichnet, dass** die zweite ebene Welle erzeugt wird, indem ein Teil des vom Beleuchtungslaser gesendeten Flusses entnommen wird.

3. Bildgenerator nach Anspruch 2, **dadurch gekennzeichnet, dass** die zweite ebene Welle (PMP2) im nicht linearen Material mit dem Nutzsignal interferiert, um ein zweites dynamisches Hologramm einzuschreiben, das von der ersten ebenen Welle (PMP1) erneut gelesen wird, um ein zweites Signal des erneuten Lesens zu bilden, wobei das zweite Signal des erneuten Lesens sich in der gleichen Richtung wie das erste Signal des erneuten Lesens ausbreitet, wodurch die Stärke des gesendeten Signals des erneuten Lesens erhöht wird.

4. Bildgenerator nach einem der vorhergehenden Ansprüche, **dadurch gekennzeichnet, dass** der Beleuchtungslaser kontinuierlich oder praktisch kontinuierlich sendet.

5. Bildgenerator nach einem der Ansprüche 2 bis 3, **dadurch gekennzeichnet, dass** der Beleuchtungslaser Impulse sendet und die Mittel zur Entnahme des vom Laser gesendeten Flusses zur Erzeugung der ebenen Wellen des Einschreibens und des erneuten Lesens des Hologramms eine variable Verzögerungsleitung (LRV) aufweisen, die die zeitliche Überdeckung des Nutzsignals und der ebenen Wellen (PMP1, PMP2) im nicht linearen Element ermöglicht.

6. Bildgenerator nach einem der Ansprüche 3 bis 5, **dadurch gekennzeichnet, dass**, da der vom Beleuchtungslaser gesendete Strahl linear polarisiert ist und die Variation des komplexen Indexes des nicht linearen Materials gemäß einer privilegierten Achse erfolgt, der Bildgenerator weiter Mittel zur Prüfung der Polarisation (25, 26) aufweist, derart, dass im nicht linearen Material die ebenen Wellen des Einschreibens und des erneuten Lesens des Hologramms die gleiche Polarisation aufweisen, während das Nutzsignal eine zu derjenigen der ebenen Wellen orthogonale Polarisation aufweist, wobei die privilegierte Achse einen Winkel von 45° zu den Polarisationsrichtungen des Nutzsignals und der ebenen Wellen bildet, wobei das phasenkonjugierte Signal dann eine Polarisation gleich derjenigen des Nutzsignals aufweist, und außerdem vor dem Erfassungsmodul einen Polarisator (26) aufweist, dessen Achse im Wesentlichen parallel zu derjenigen des Nutzsignals liegt, so dass der Störfluss, der von der Streuung der ebenen Wellen im nicht linearen Material in der gleichen Richtung wie das phasenkonjugierte Signal stammen kann, minimiert wird.

7. Bildgenerator nach einem der Ansprüche 3 bis 5, **dadurch gekennzeichnet, dass** das nicht lineare Material von einem von Laserdioden gepumpten Laserverstärkungsmedium gebildet wird, das eine Verstärkung des konjugierten Signals bezüglich des Nutzsignals ermöglicht.
